# EUROPÄISCHE PATENTANMELDUNG

(11) **EP 1 710 349 A2**
(43) Veröffentlichungstag der Anmeldung: **11.10.2006**
(21) Anmeldenummer: 06007202.2
(22) Anmeldetag: 05.04.2006
(51) Int. Cl.: E01C 9/00, E03F 5/06

(54) **Baumrost**

(30) Priorität: 09.04.2005 DE 102005016378
(71) Anmelder: Buderus Guss GmbH, D-35576 Wetzlar (DE)
(72) Erfinder: Zecher, Steffen, 35460 Steffenberg (DE)
(74) Vertreter: Olbricht, Karl Heinrich

(57) **Zusammenfassung**

Die Erfindung betrifft einen Baumrost zum Abdecken des Wurzelbereichs von Bäumen, bestehend aus mindestens einem flächigen, gusseisernen, mit mehreren Durchbrechungen (2, 2') versehenen Einzelelement (1), welches auf einer tragfähigen Unterkonstruktion und/oder einem Fundament aufliegt und wahlweise mit weiteren Einzelelementen (1) gekoppelt ist. Der Erfindung liegt die Aufgabe zugrunde, einen Baumrost zu schaffen, welcher sich gut und flexibel in ein Stadt- und Straßenbild einfügen lässt. Gekennzeichnet ist die Erfindung dadurch, dass der Baumrost oder dessen Einzelelement (1) in mindestens einem Teilbereich mit einem Rinnenkörper (3, 3') und/oder einem Ablauf kombiniert ist. Dabei liegt der Baumrost oder dessen Einzelelement (1) auf dem Rinnenkörper (3) und/oder dem Ablauf als Fundament auf. Ein Einzelelement (1) kann erstens einen zugeordneten Rinnenkörper (3, 3') und/oder einen Ablauf vollständig überdecken und dabei gleichzeitig einen Einlaufrost ausbilden. Andererseits ist eine teilweise Überdeckung möglich, wenn ein Einzelelement (1) nur im Randbereich auf einem zugeordneten Rinnenkörper (3) und/oder einem Ablauf aufliegt.

## Beschreibung

Die Erfindung betrifft einen Baumrost nach dem Oberbegriff des Patentanspruches 1.

Mit Baumrosten, welche in einen Straßenbelag integriert sind, wird der Wurzelbereich von Bäumen abgedeckt und der Boden im Bereich der Baumscheibe vor Verdichtungen geschützt. Dies ist für die Nährstoff-, insbesondere Wasserzufuhr, sowie für den Gasaustausch wichtig. Aus diesem Grund sind Baumroste mit Durchbrechungen, in der Regel Löcher oder Schlitze, versehen. Die Gestaltung der Durchbrechungen orientiert sich dabei im Wesentlichen an optischen und fertigungstechnischen Anforderungen.

Gusseiserne Baumroste sind allgemein bekannt. Sie werden beispielsweise gemäß der DE 93 10 718 U1 aus einer Anzahl von Einzelelementen mit Verbindungselementen zu einer geschlossenen Einheit zusammengefügt und besitzen eine innere Öffnung für den Baumstamm sowie eine geschlitzte Oberfläche für die Belüftung und Bewässerung des Wurzelbereichs. Im äußeren Bereich werden die Einzelelemente entweder auf ein geeignetes, bauseits zu erstellendes Streifenfundament aus Beton aufgelegt, so dass der Baumrost die Pflanzgrube zum Baumstamm hin freitragend überkragt. Alternativ dazu können die Einzelelemente von einer Unterkonstruktion, beispielsweise aus Stahlprofilen, getragen werden. Die Fundamentgestaltung ist also in beiden Fällen recht aufwändig und muss jeweils der gewählten Baumrost-Ausführung angepasst sein.

Das Eindringen von Oberflächenwasser in die Baumscheibe ist besonders in stark frequentierten Straßenbereichen wegen der negativen Einflüsse auf den Baum durch Streusalz, Schmutz oder Unrat nicht erwünscht. Somit werden unabhängig von den Baumscheiben in anderen Bereichen der Straßendecke auf herkömmliche Art Rinnen und Straßenabläufe angeordnet, um das Oberflächenwasser zu sammeln. Dies bedeutet, dass an vielen weiteren Punkten der Straßenbelag unterbrochen ist, und dass die Verkehrsfläche zu diesen Einläufen hin geneigt sein muss. Gerade bei größeren, zusammenhängenden Flächen ergibt sich durch Roste über den Rinnen oder Abläufen an vielen verschiedenen Stellen ein unterbrochenes, unschönes Gesamtbild. Zudem ist es bei großen Pflasterflächen relativ arbeitsintensiv, das nötige Gefälle sowie die entsprechenden Zuschnitte für die Unterbrechungen herzustellen. Auch bilden die Roste über den Rinnen oder Abläufen möglicherweise Stolperstellen auf stark von Fußgängern frequentierten Straßenbereichen, insbesondere wenn schon beim Einbau kleine Höhendifferenzen zur umgebenden Fläche entstehen. Durch Schwerlastverkehr oder andere Belastungen können sich diese eventuell noch verstärken, denn Rinnen und Abläufe stellen erfahrungsgemäß immer Schwachpunkte im Straßenbelag in Bezug auf Absenkungen durch Verkehrslasten dar.

Der Erfindung liegt daher die Aufgabe zugrunde, einen Baumrost zu schaffen, welcher sich gut und flexibel in ein Stadt- und Straßenbild einfügen lässt und vorstehende Nachteile vermeidet.

Der erfindungsgemäße Baumrost besitzt die im Patentanspruch 1 genannten Merkmale. Weitere Ausgestaltungen sind den Unteransprüchen zu entnehmen.

Der Baumrost ist dadurch gekennzeichnet, dass er selbst oder dessen Einzelelement in mindestens einem Teilbereich mit einem Rinnenkörper und/oder einem Ablauf kombiniert ist.

Bei einer ersten Ausführungsvariante liegt der Baumrost oder dessen Einzelelement auf dem Rinnenkörper und/oder dem Ablauf auf. Diese Bauteile sind dazu als massive, tragfähige Beton-, Kunststoff- oder Stahlkörper ausgeführt und dienen als Fundament. Dabei kann es sich um die bekannten, vorgefertigten Bauelemente handeln. Rinnenkörper und/oder Ablauf sind im äußeren Randbereich eines Einzelelementes angeordnet, so dass, je nach Anzahl, Punkt- oder Streifenfundamente ausgebildet werden. Mehrere Rinnenkörper und/oder Abläufe können miteinander gekoppelt werden. Dann wird einerseits über die tragenden Körper ein zusammenhängendes Fundament ausgebildet und andererseits werden alle Ablaufleitungen in eine gemeinsame Sammelleitung, welche zum Beispiel an die Kanalisation angeschlossen ist, zusammengeführt.

Ein Einzelelement kann einen zugeordneten Rinnenkörper und/oder Ablauf vollständig überdecken und dient so gleichzeitig auch als Einlaufrost. Mindestens im Bereich über einem zugeordneten Rinnenkörper und/oder Ablauf ist das betreffende Einzelelement mit Durchbrechungen versehen, welche die Funktion als Einlaufrost in dieser Zone und insbesondere die Schluckfähigkeit für Oberflächenwasser begünstigen. Daher weichen vorzugsweise Form sowie Ausrichtung der Durchbrechungen eines Einzelelementes im Bereich direkt über einem zugeordneten Rinnenkörper und/oder Ablauf von der Form und Ausrichtung in den übrigen Bereichen des Baumrostes ab. So wird beispielsweise vermieden, dass Oberflächenwasser bei Starkregen oder hoher Strömungsgeschwindigkeit über den Rost hinweg läuft und trotzdem bis in die Baumscheibe gelangt. Vorteilhaft für Reinigungsarbeiten am Rinnenkörper und/oder Ablauf ist es, wenn ein diese als Einlaufrost abdeckendes Einzelelement lösbar mit benachbarten Einzelelementen verbunden ist. Dafür können mindestens ein Drehpunkt zum Aufklappen und/oder von der Oberseite her zugängliche Verriegelungen oder Rastvorrichtungen vorgesehen werden.

Weiterhin kann ein Einzelelement einen zugeordneten Rinnenkörper und/oder Ablauf auch nur teilweise überdecken und nur im Randbereich auf diesem aufliegen. Dann ist ein zusätzlicher Einlaufrost für den Rinnenkörper und/oder Ablauf vorgesehen, welcher oberflächenbündig angeordnet ist. Die Formgestaltung sowie die Ausrichtung der Durchbrechungen dieses Einlaufrostes für den Rinnenkörper und/oder den Ablauf sind unabhängig von der Form und Ausrichtung der Durchbrechungen der anderen Einzelelemente. Dabei ist es für die Montage günstig, wenn der Rinnenkörper und/oder Ablauf Befestigungs- und/oder Zentriervorrichtungen für das zugeordnete, dort aufliegende Einzelelement aufweist.

Bei einer zweiten Ausführungsvariante ist im Randbereich eines Baumrostes oder eines Einzelelementes mindestens ein vorzugsweise aus Stahlblech oder Kunststoff bestehender Rinnenkörper und/oder Ablauf unterhalb der zugeordneten Durchbrechungen fixiert. Die Auflage für den Baumrost oder ein Einzelelement bildet dann im Randbereich ein herkömmliches Fundament oder eine bekannte tragfähige Unterkonstruktion. Auch dabei können mehrere Rinnenkörper und/oder Abläufe miteinander gekoppelt werden und alle Ablaufleitungen sind leicht zusammenzuführen. In einer bevorzugten Ausführungsform werden die Rinnenkörper und/oder Abläufe im Randbereich des Baumrostes oder des Einzelelementes vorzugsweise von der Unterseite her fixiert. Dies erfolgt durch Einhängen von Laschen in die Durchbrechungen und/oder durch lösbare Befestigungselemente. Es ist vorteilhaft wenn ein Einzelelement, welches mit einem Rinnenkörper und/oder Ablauf an der Unterseite versehen ist, lösbar mit benachbarten Einzelelementen verbunden ist. Auch für diese Variante können mindestens ein Drehpunkt zum Aufklappen und/oder von der Oberseite her zugängliche Verriegelungen oder Rastvorrichtungen vorgesehen sein.

Mit der Erfindung entsteht ein Baumrost, welcher sich gut und flexibel in ein Stadt- und Straßenbild einfügen lässt. Es handelt sich dabei um eine einfache und wirtschaftliche Lösung, denn Baumscheiben bzw. Baumroste liegen naturgemäß außerhalb der stark belasteten Fahrbahnbereiche. Als wesentliche Vorteile ergeben sich die relativ geringen Einflüsse durch Verkehrslasten, die einfache Fundamenterstellung für einen Baumrost mit Rinnenkörpern und/oder Abläufen, das Verringern der Unterbrechungen im Straßenbelag auf den Bereich um die Baumscheiben, das Verringern möglicher Stolperstellen und Schwachpunkte im Straßenbelag in Bezug auf Absenkungen sowie größere und einfacher herzustellende Flächen, weil die Verkehrsfläche nur zu den Baumscheiben hin geneigt sein muss.

Mit der erfindungsgemäßen Lösung stehen flexible Gestaltungsmöglichkeiten zur Verfügung, denn ein Rinnenkörper oder Ablauf kann auch nur an ein oder zwei Seiten bei einem rechteckigen Baumrost oder in nur einem Randsegment bei einem runden Baumrost angeordnet sein. Dies ist abhängig von der Gefällesituation der betreffenden Verkehrsfläche. Der übrige Randbereich bzw. Umfang des Baumrostes wird dann mit herkömmlichen Fundamenten abgestützt.

Es ist ebenfalls möglich, einen Ablaufrost in ein Einzelelement zu integrieren. Dazu wird dieses bzw. seine Rostfläche im Randbereich ausgespart. Somit können bekannte Ablaufbauteile in die erfindungsgemäßen Baumroste integriert werden.

Die Zeichnung stellt ein Ausführungsbeispiel der Erfindung dar. Einen Baumrost zeigt:
- Fig. 1:: mit bis in den Randbereich der Anordnung reichenden Einzelelementen in der Draufsicht,

- Fig. 2:: mit bis in den Randbereich der Anordnung reichenden Einzelelementen gemäß Fig. 1 in einem vertikalen Schnitt,
- Fig. 3:: mit nur bis in den Randbereich von umgebenden Rinnenelementen reichenden Einzelelementen in der Draufsicht,
- Fig. 4:: mit nur bis in den Randbereich von umgebenden Rinnenelementen reichenden Einzelelementen gemäß Fig. 3 in einem vertikalen Schnitt und
- Fig. 5:: mit einem im Randbereich der Anordnung auf der Unterseite fixierten Rinnenkörper in einem vertikalen Schnitt.

Der Baumrost besteht aus flächigen, miteinander gekoppelten, gusseisernen Einzelelementen 1 mit Durchbrechungen 2. Dabei ist mindestens ein Einzelelement 1 in mindestens einem außen gelegenen Teilbereich mit einem Rinnenkörper 3 mit einer Ablaufrinne 4 kombiniert und liegt auf diesem Streifenfundament auf.

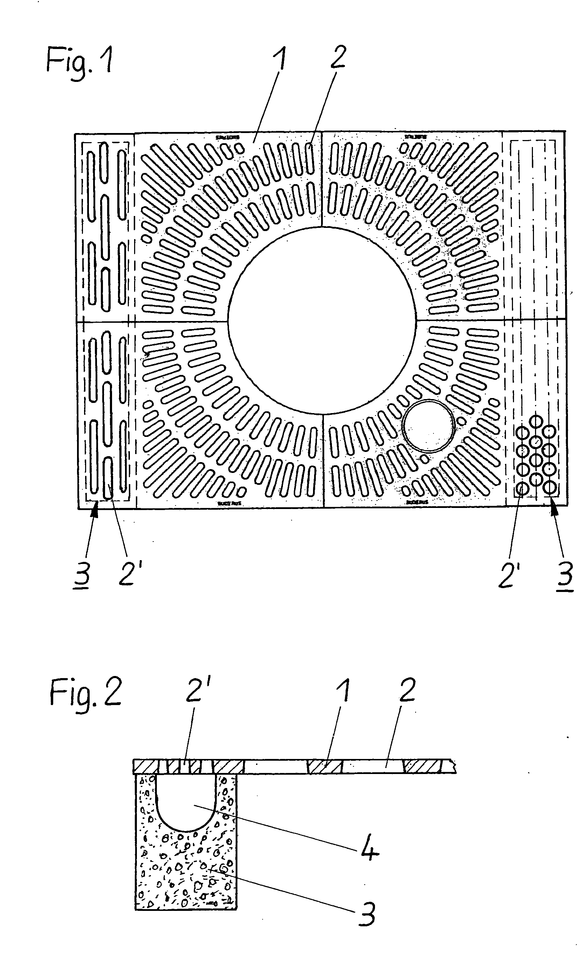

Gemäß den Fig. 1 und 2 überdecken Einzelelemente 1 zugeordnete, an zwei gegenüberliegenden Seiten angeordnete Rinnenkörper 3 vollständig. Sie bilden in diesen Zonen über der Ablaufrinne 4 gleichzeitig einen Einlaufrost, mit Durchbrechungen 2', welche insbesondere die Schluckfähigkeit für Oberflächenwasser begünstigen. Dazu weicht die Form sowie die Ausrichtung der Durchbrechungen 2' im Bereich über einem zugeordneten Rinnenkörper 3 von der Gestaltung und Ausrichtung der Durchbrechungen 2 in den übrigen Bereichen ab.

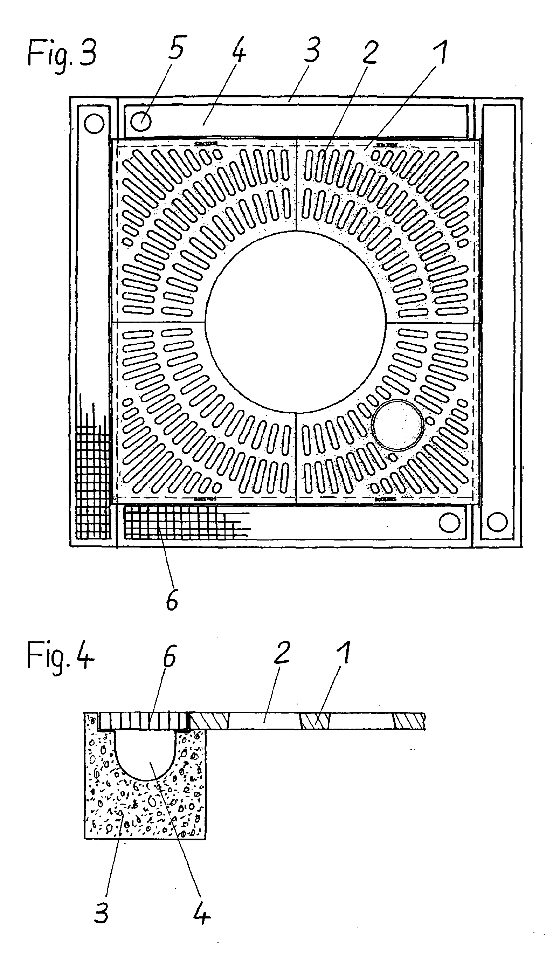

Bei der Ausführungsvariante gemäß den Fig. 3 und Fig. 4 entsteht durch vier gekoppelte Rinnenkörper 3 ein umlaufendes Streifenfundament. Auch die Abläufe 5 der Ablaufrinnen 4 sind einfach miteinander zu verbinden. Dabei überdecken die Einzelelemente 1 die zugeordneten Rinnenkörper 3 teilweise und liegen im Randbereich auf diesen auf. Für den Rinnenkörper 3 ist daher ein jeweils ein zusätzlicher Einlaufrost 6 vorgesehen, welcher oberflächenbündig mit den Einzelelementen 1 angeordnet ist. Auch hierbei weichen Form sowie Ausrichtung der Durchbrechungen 2' des Einlaufrostes 6 für den Rinnenkörper 3 von den übrigen Durchbrechungen 2 der Einzelelemente 1 ab und sind beim gezeigten Ausführungsbeispiel gitterartig dargestellt. Am Rinnenkörper 3 werden sowohl die Einzelelemente 1 als auch die Einlaufroste 6 befestigt und/oder zentriert. Der Unterschied zu bekannten Rinnenkörpern 3 besteht im gezeigten Ausführungsbeispiel lediglich in der unterschiedlichen Höhe der beiden in Längsrichtung verlaufenden, den Einlaufrost 6 einfassenden Schenkel. Der innere Schenkel muss für das zugeordnete, dort aufliegende Einzelelement 1 mindestens auf einem Teilstück niedriger ausgeführt oder ausgespart werden.

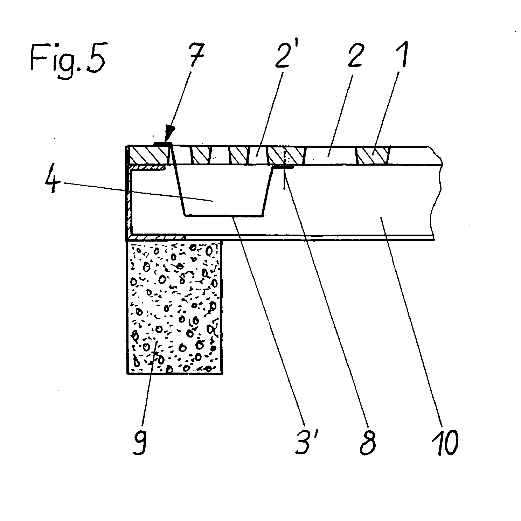

Beim in Fig. 5 dargestellten Ausführungsbeispiel ist im Randbereich eines Baumrostes oder eines Einzelelementes 1 ein aus Stahlblech oder Kunststoff bestehender Rinnenkörper 3' unterhalb von zugeordneten Durchbrechungen 2' angebracht. Der Rinnenkörper 3' wird von der Unterseite her fixiert, nämlich durch Einhängen von Laschen 7, welche auf der Oberfläche aufliegen, in Durchbrechungen 2' und/oder durch lösbare Befesti-gungselemente 8, welche einen Schenkel des Rinnenkörpers 3' durchgreifen. Die Auflage für die Einzelelemente 1 bildet dann im Randbereich ein herkömmliches Fundament 9 mit einem aufgesetzten Tragrahmen 10.

## Patentansprüche

1. Baumrost zum Abdecken des Wurzelbereichs von Bäumen, bestehend aus mindestens einem flächigen, gusseisernen, mit mehreren Durchbrechungen versehenen Einzelelement, welches auf einer tragfähigen Unterkonstruktion und/oder einem Fundament aufliegt und wahlweise mit weiteren Einzelelementen gekoppelt ist, **dadurch gekennzeichnet, dass** der Baumrost oder dessen Einzelelement (1) in mindestens einem Teilbereich mit einem Rinnenkörper (3, 3') und/oder einem Ablauf kombiniert ist.

2. Baumrost nach Anspruch 1, **dadurch gekennzeichnet, dass** der Baumrost oder dessen Einzelelement (1) auf dem Rinnenkörper (3) und/oder dem Ablauf als Fundament aufliegt und dass diese als massive, tragfähige Beton-, Kunststoff- oder Stahlkörper ausgeführt sind.

3. Baumrost nach den Ansprüchen 1 oder 2, **dadurch gekennzeichnet, dass** der Rinnenkörper (3) und/oder der Ablauf im äußeren Bereich eines Einzelelementes (1) angeordnet sind und dass, je nach Anzahl, Punkt- oder Streifenfundamente ausgebildet werden.

4. Baumrost nach einem der Ansprüche 1 bis 3, **dadurch gekennzeichnet, dass** mehrere Rinnenkörper (3) und/oder Abläufe miteinander zu koppeln sind, wobei **dadurch** einerseits ein zusammenhängendes Fundament ausgebildet wird und andererseits alle Ablaufleitungen zusammenzuführen sind.

5. Baumrost nach einem der Ansprüche 1 bis 4, **dadurch gekennzeichnet, dass** ein Einzelelement (1) einen zugeordneten Rinnenkörper (3, 3') und/oder einen Ablauf vollständig überdeckt und einen Einlaufrost ausbildet.

6. Baumrost nach einem der Ansprüche 1 bis 5, **dadurch gekennzeichnet, dass** ein Einzelelement (1) mindestens im Bereich über einem zugeordneten Rinnenkörper (3, 3') und/oder einem Ablauf mit Durchbrechungen (2') versehen ist, welche die Funktion als Einlaufrost in dieser Zone und insbesondere die Schluckfähigkeit für Oberflächenwasser begünstigen.

7. Baumrost nach einem der Ansprüche 1 bis 6, **dadurch gekennzeichnet, dass** die Form sowie die Ausrichtung der Durchbrechungen (2') eines Einzelelementes (1) im Bereich über einem zugeordneten Rinnenkörper (3, 3') und/oder einem Ablauf von der Form und Ausrichtung von Durchbrechungen (2) in den übrigen Bereichen abweicht.

8. Baumrost nach einem der Ansprüche 1 bis 7, **dadurch gekennzeichnet, dass** ein Einzelelement (1), welches einen zugeordneten Rinnenkörper (3, 3') und/oder einen Ablauf vollständig überdeckt und einen Einlaufrost ausbildet, lösbar mit benachbarten Einzelelementen (1) verbunden ist, wobei mindestens ein Drehpunkt zum Aufklappen und/oder von der Oberseite her zugängliche Verriegelungen oder Rastvorrichtungen vorgesehen sind.

9. Baumrost nach einem der Ansprüche 1 bis 4, **dadurch gekennzeichnet, dass** ein Einzelelement (1) einen zugeordneten Rinnenkörper (3) und/oder einen Ablauf teilweise überdeckt und im Randbereich auf diesem aufliegt, und dass ein zusätzlicher Einlaufrost (6) für den Rinnenkörper (3) und/oder den Ablauf vorgesehen ist, welcher oberflächenbündig angeordnet ist.

10. Baumrost nach einem der Ansprüche 1 bis 4 oder 9, **dadurch gekennzeichnet, dass** die Form sowie die Ausrichtung der Durchbrechungen (2') des Einlaufrostes (6) für den Rinnenkörper (3) und/oder den Ablauf von der Form und Ausrichtung der Durchbrechungen (2) eines Einzelelementes (1) abweicht.

11. Baumrost nach einem der Ansprüche 1 bis 10, **dadurch gekennzeichnet, dass** der Rinnenkörper (3) und/oder der Ablauf Befestigungs- und/oder Zentriervorrichtungen für das zugeordnete, dort aufliegende Einzelelement (1) aufweisen.

12. Baumrost nach Anspruch 1, **dadurch gekennzeichnet, dass** im Randbereich eines Baumrostes oder eines Einzelelementes (1) mindestens ein vorzugsweise aus Stahlblech oder Kunststoff bestehender Rinnenkörper (3') und/oder Ablauf unterhalb der zugeordneten Durchbrechungen (2') fixiert ist, wobei mehrere Rinnenkörper (3') und/oder Abläufe miteinander zu koppeln und alle Ablaufleitungen zusammenzuführen sind.

13. Baumrost nach den Ansprüchen 1 oder 12, **dadurch gekennzeichnet, dass** die Rinnenkörper (3') und/oder Abläufe im Randbereich eines Baumrostes oder eines Einzelelementes (1) vorzugsweise von der Unterseite her, durch Einhängen von Laschen (7) in Durchbrechungen (2') und/oder durch lösbare Befestigungselemente (8), zu fixieren sind.

14. Baumrost nach einem der Ansprüche 1, 12 oder 13, **dadurch gekennzeichnet, dass** ein Einzelelement (1), welches mit einem Rinnenkörper (3') und/oder einem Ablauf an der Unterseite versehen ist, lösbar mit benachbarten Einzelelementen (1) verbunden ist, wobei mindestens ein Drehpunkt zum Aufklappen und/oder von der Oberseite her zugängliche Verriegelungen oder Rastvorrichtungen vorgesehen sind.
